# EUROPÄISCHE PATENTSCHRIFT

(11) **EP 2 222 495 B1**
(45) Veröffentlichungstag und Bekanntmachung des Hinweises auf die Patenterteilung: **22.02.2012**
(21) Anmeldenummer: 08862435.8
(22) Anmeldetag: 06.12.2008
(51) Int. Cl.: B60K 6/445, F16H 3/72

(54) **HYBRIDGETRIEBE**
HYBRID TRANSMISSION
TRANSMISSION HYBRIDE

(30) Priorität: 17.12.2007 US 7772; 17.10.2008 US 288321
(43) Veröffentlichungstag der Anmeldung: 01.09.2010
(73) Patentinhaber: Daimler AG, 70327 Stuttgart (DE)
(72) Erfinder: BROUWER, Markus, 70197 Stuttgart (DE); KAEHLER, Benjamin, 53819 Neunkirchen-Seelscheid (DE); NOREIKAT, Karl-Ernst, 73733 Esslingen (DE)
(74) Vertreter: JENSEN & SON
(86) Internationale Anmeldenummer: PCT/EP2008/010368
(87) Internationale Veröffentlichungsnummer: WO 2009/077097

(56) Entgegenhaltungen:
- US-A1- 2006 148 606
- US-B1- 6 551 208

## Beschreibung

Die Erfindung betrifft ein Hybridgetriebe mit den Merkmalen des Oberbegriffs des Anspruchs 1.

Aus der Patentschrift US 6,551,208 B1 ist ein Hybridgetriebe bekannt, bei dem drei Differentiale, zwei Elektromaschinen und vier Schaltelemente derart angeordnet sind, dass drei Vorwärtsgänge und vier stufenlose Fahrbereiche realisiert sind.

Aufgabe der Erfindung ist es, ein Hybridgetriebe mit verbessertem Wirkungsgrad vorzuschlagen.

Die Aufgabe wird durch die Merkmale des Anspruchs 1 gelöst. Demgemäß sind zwei Getriebeelemente des ersten Differentials durch ein fünftes Schaltelement verbindbar. Ist das fünfte Schaltelement geschlossen, so läuft das erste Differential im Block um.

Durch das fünfte Schaltelement können weitere Vorwärtsgänge und weitere stufenlose Fahrbereiche realisiert werden.

Die Anordnung der stufenlosen Fahrbereiche und festen Vorwärtsgänge ermöglicht in Kombination mit einer Auslegung der Differentiale eine deutliche Reduktion der notwendigen elektrischen Leistungen (Daueranforderungen).

Durch das fünfte Schaltelement können die Bereiche hoher elektrischer Leistung innerhalb der Bereiche der doppelten Leistungsverzweigung durch das Schalten in einen festen mechanischen Vorwärtsgang vermieden werden.

Die festen mechanischen Vorwärtsgänge erlauben auch einen effizienten Betrieb bei hoher Last. Das elektrische Fahren ist in einem großen Geschwindigkeitsbereich, insbesondere auch bei höheren Geschwindigkeiten, möglich.

Ein erster Freilauf, durch den die Getriebeeingangswelle mit einem Gehäuse koppelbar ist, verhindert, dass der Verbrennungsmotor von der Getriebeeingangswelle entgegen seiner Laufrichtung angetrieben wird. Des Weiteren kann während des elektrischen Fahrens mittels der zweiten Elektromaschine über den ersten Freilauf ein zusätzliches Moment durch die erste Elektromaschine bereitgestellt werden.

Durch den zweiten Freilauf kann der Verbrennungsmotor ohne das Bereitstellen von hydraulischem Druck gestartet werden.

Weitere Vorteile der Erfindung gehen aus der Beschreibung und der Zeichnung hervor. Ein konkretes Ausführungsbeispiel der Erfindung ist in der Zeichnung vereinfacht dargestellt und in der nachfolgenden Beschreibung näher erläutert. Es zeigen:
- Fig. 1: einen schematischen Räderplan eines Ausführungsbeispiels eines erfindungsgemäßen Hybridgetriebes und
- Fig. 2: eine Tabelle, die die geschalteten Schaltelemente bei den jeweiligen Vorwärtsgängen bzw. stufenlosen Fahrbereichen darstellt.

Die Erfindung betrifft ein Hybridgetriebe HG, welches vorzugsweise Einsatz in einem Kraftfahrzeug findet, vorzugsweise in Fahrzeuglängsrichtung eingebaut ist und vorzugsweise zumindest teilweise in einem Fahrzeugtunnel integriert ist.

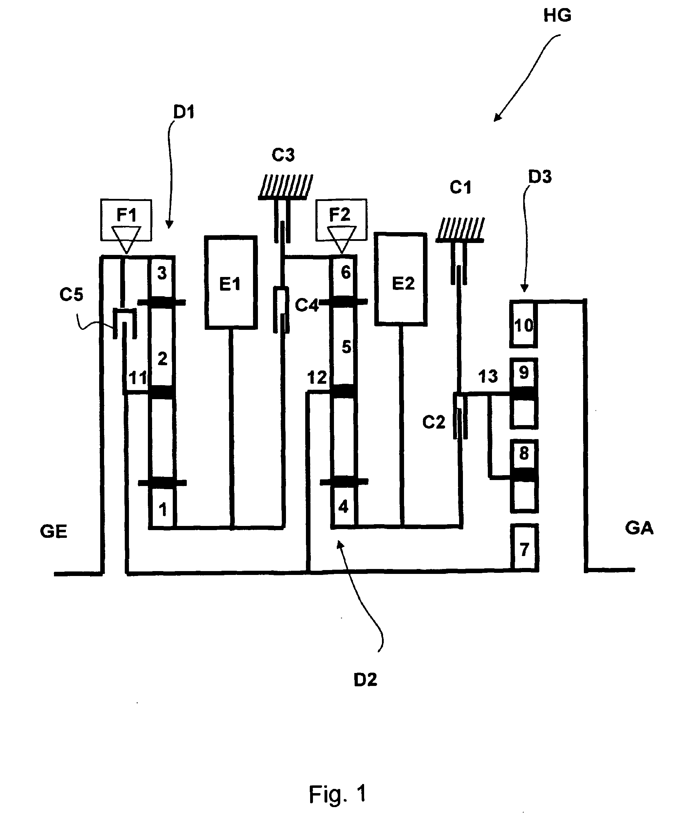

Das in Figur 1 dargestellte Ausführungsbeispiel eines erfindungsgemäßen Hybridgetriebes HG besitzt eine Getriebeeingangswelle GE, die in Antriebsverbindung mit einem Verbrennungsmotor steht, und einer Getriebeausgangswelle GA, die in Antriebsverbindung mit Rädern des Kraftfahrzeuges steht.

In dem Hybridgetriebe HG sind in der folgenden Reihenfolge in axial hintereinander liegenden Ebenen und im Wesentlichen koaxial zueinander:
- ein fünftes Schaltelement C5 und ein erster Freilauf F1,
- ein erstes Differential D1,
- eine erste Elektromaschine E1,
- ein erstes Schaltelement C4 und ein drittes Schaltelement C3,
- ein zweites Differential D2 und ein zweiter Freilauf F2,
- eine zweite Elektromaschine E2,
- ein zweites Schaltelement C2 und ein viertes Schaltelement C1, und
- ein drittes Differential D3
zwischen die Getriebeeingangswelle GE und die Getriebeausgangswelle GA zwischengeschaltet.

Die Getriebeeingangswelle GE steht in fester Antriebsverbindung mit einem Hohlrad 3 des ersten Differentials D1 und kann mittels des fünften Schaltelements C5 in Verbindung mit einem Steg 11 des ersten Differentials D1, einem Steg 12 des zweiten Differentials D2 und einem Sonnenrad 7 des dritten Differentials D3 gebracht werden. Bei dem fünften Schaltelement C5 handelt es sich vorzugsweise um eine Kupplung. Alternativ können durch die Kupplung C5 auch zwei andere Getriebeelemente des ersten Differentials D1 verbindbar sein. Der Steg 11 des ersten Differentials D1 lagert einen Planeten 2. Der Steg 12 des zweiten Differentials D2 lagert einen Planeten 5.

Die Getriebeeingangswelle GE ist mittels des ersten mechanischen Freilaufs F1 derart mit einem Gehäuse koppelbar, dass der Verbrennungsmotor von der Getriebeeingangswelle GE nicht entgegen seiner Laufrichtung angetrieben werden kann.

Ein Sonnenrad 1 des ersten Differentials D1 steht in fester Antriebsverbindung mit der ersten Elektromaschine E1 und kann mittels des ersten Schaltelements C4, vorzugsweise als Kupplung ausgebildet, in Verbindung mit einem Hohlrad 6 des zweiten Differentials D2 und mittels des dritten Schaltelements C3, vorzugsweise als Bremse ausgebildet, in Verbindung mit einem Gehäuse gebracht werden.

Das Hohlrad 6 des zweiten Differentials D2 ist mittels des zweiten Freilaufs F2 mit einem Gehäuse koppelbar. Der zweite Freilauf F2 ist derart als hydraulischer Freilauf ausgebildet, dass er bei einem Druckabfall schließt und als Bremse fungiert. Somit kann durch das Anlegen eines Momentes an der zweiten Elektromaschine E2 das Moment des Stegs 11 des ersten Differentials D1 festgelegt werden. Dies ermöglicht das Starten des Verbrennungsmotors durch die erste Elektromaschine E1. Somit ist das schnelle Starten des Verbrennungsmotors nur mit elektrischer Energie möglich ohne zuerst hydraulischen Druck aufbauen zu müssen.

Ein Sonnenrad 4 des zweiten Differentials D2 steht in fester Antriebsverbindung mit der zweiten Elektromaschine E2 und kann mittels des zweiten Schaltelements C2, vorzugsweise als Kupplung ausgebildet, in Verbindung mit einem Steg 13 des dritten Differentials D3 und mittels des vierten Schaltelements C1, vorzugsweise als Bremse ausgebildet, in Verbindung mit einem Gehäuse gebracht werden.

Der Steg 13 des dritten Differentials D3 ist als Doppelsteg ausgebildet und lagert die zwei miteinander kämmenden Planeten 8, 9.

Ein Hohlrad 10 des dritten Differentials D3 steht in fester Antriebsverbindung mit der Getriebeausgangswelle GA.

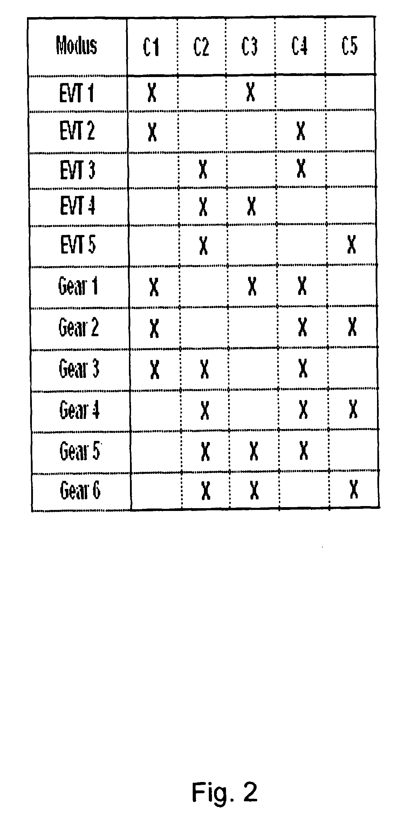

Figur 2 zeigt die unterschiedlichen Betriebsmodi, nämlich sechs Vorwärtsgänge Gear 1 bis Gear 6 und fünf stufenlose Fahrbereiche EVT 1 bis EVT 5. Hierbei bedeutet ein "X", dass das jeweilige Schaltelement C1 bis C5 geschlossen ist.

Das Schalten zwischen den Betriebsmodi erfolgt vorzugsweise wechselnd zwischen einem festen Vorwärtsgang und einem stufenlosen Fahrbereich.

Wird also im stufenlosen Fahrbereich EVT1 mit geschlossenen Bremsen C1, C3 angefahren, so erfolgt dann durch Schließen der Kupplung C4 ein Wechsel in den Vorwärtsgang Gear 1. Umgekehrt erfolgt der Wechsel von Gear 1 zu EVT1 durch Öffnen der Kupplung C4.

Als nächstes erfolgt durch Öffnen der Bremse C3 ein Wechsel in den stufenlosen Fahrbereich EVT2. Wahlweise kann nun durch Schließen der Kupplung C5 in den Vorwärtsgang Gear 2 oder durch Schließen der Kupplung C2 in den Vorwärtsgang Gear 3 gewechselt werden.

Vom Vorwärtsgang Gear 3 wird durch Öffnen der Bremse C1 in den stufenlosen Fahrbereich EVT3 gewechselt. Von dort kann alternativ durch Schließen der Kupplung C5 in den Vorwärtsgang Gear 4 oder durch Schließen der Bremse C3 in den Vorwärtsgang Gear 5 gewechselt werden.

Vom Vorwärtsgang Gear 4 aus kann durch Öffnen der Kupplung C4 in den stufenlosen Fahrbereich EVT5 gewechselt werden. Vom stufenlosen Fahrbereich EVT5 aus ist durch Schließen der Bremse C3 ein Wechsel in den Vorwärtsgang Gear 6 möglich.

Vom Vorwärtsgang Gear 5 aus kann durch Öffnen der Kupplung C4 in den stufenlosen Fahrbereich EVT4 gewechselt werden. Vom stufenlosen Fahrbereich EVT4 aus ist durch Schließen der Kupplung C5 ein Wechsel in den Vorwärtsgang Gear 6 möglich.

## Patentansprüche

1. Hybridgetriebe für ein Kraftfahrzeug mit
- einer Getriebeeingangswelle (GE), die in Antriebsverbindung mit einem Verbrennungsmotor steht oder bringbar ist, und einer Getriebeausgangswelle (GA),
- drei Differentialen (D1, D2, D3), die in den Kraftfluss zwischen der Getriebeeingangswelle (GE) und der Getriebeausgangswelle (GA) zwischengeschaltet sind,
- wobei eine erstes Getriebeelement (Hohlrad 3) des ersten Differentials (D1) mit der Getriebeeingangswelle (GE) in Antriebsverbindung steht,
- ein zweites Getriebeelement (Steg 11) des ersten Differentials (D1) mit einem ersten Getriebeelement (Steg 12) des zweiten Differentials (D2) und einem ersten Getriebeelement (Sonnenrad 7) des dritten Differentials (D3) in Antriebsverbindung steht,
- ein drittes Getriebeelement (Sonnenrad 1) des ersten Differentials (D1) mit einer ersten Elektromaschine (E1) in Antriebsverbindung steht und mit einem zweiten Getriebeelement (Hohlrad 6) des zweiten Differentials (D2) mittels eines ersten Schaltelements (C4) in Antriebsverbindung bringbar ist,
- ein drittes Getriebeelement (Sonnenrad 4) des zweiten Differentials (D2) mit einer zweiten Elektromaschine (E2) in Antriebsverbindung steht und mit einem zweiten Getriebeelement (Steg 13) des dritten Differentials (D3) mittels eines zweiten Schaltelements (C2) in Antriebsverbindung bringbar ist,
- ein drittes Getriebeelement (Hohlrad 10) des dritten Differentials (D3) mit der Getriebeausgangswelle (GA) in Antriebsverbindung steht,
- das zweite Getriebeelement (Hohlrad 6) des zweiten Differentials (D2) mittels eines dritten Schaltelements (C3) mit einem Gehäuse verbindbar ist,
- das zweite Getriebeelement (Steg 13) des dritten Differentials (D3) mittels eines vierten Schaltelements (C1) mit einem Gehäuse verbindbar ist,
**dadurch gekennzeichnet, dass**
zwei Getriebeelemente des ersten Differentials (D1) durch ein fünftes Schaltelement (C5) verbindbar sind.

2. Hybridgetriebe nach Anspruch 1,
**dadurch gekennzeichnet, dass**
das erste Getriebeelement (Hohlrad 3) und das zweite Getriebeelement (Steg 11) des ersten Differentials (D1) durch das fünfte Schaltelement (C5) verbindbar sind.

3. Hybridgetriebe nach einem der vorhergehenden Ansprüche,
**dadurch gekennzeichnet, dass**
die Getriebeeingangswelle (GE) mittels eines ersten Freilaufs (F1) derart mit einem Gehäuse koppelbar ist, dass der Verbrennungsmotor von der Getriebeeingangswelle (GE) nicht entgegen seiner Laufrichtung angetrieben werden kann.

4. Hybridgetriebe nach einem der vorhergehenden Ansprüche,
**dadurch gekennzeichnet, dass**
das zweite Getriebeelement (Hohlrad 6) des zweiten Differentials (D2) mittels eines zweiten Freilaufs (F2) mit einem Gehäuse koppelbar ist.

5. Hybridgetriebe nach einem der vorhergehenden Ansprüche,
**dadurch gekennzeichnet, dass**
sechs Vorwärtsgänge (Gear 1 bis Gear 6) und fünf stufenlose Fahrbereiche (EVT 1 bis EVT 5) realisiert sind.

6. Hybridgetriebe nach einem der vorhergehenden Ansprüche,
**dadurch gekennzeichnet, dass**
zwei Bremsen (C1, C3) und drei Kupplungen (C2, C4, C5) als Schaltelemente vorgesehen sind.

## Claims

1. Hybrid gearbox for a motor vehicle, comprising
- a gearbox input shaft (GE) which is in or can be brought into drive connection with an internal combustion engine, and
- a gearbox output shaft (GA),
- three differentials (D1, D2, D3) which are installed into the power flow between the gearbox input shaft (GE) and the gearbox output shaft (GA),
- wherein a first transmission element (internal gear 3) of the first differential (D1) is drive-connected to the gearbox input shaft (GE),
- a second transmission element (web 11) of the first differential (D1) is drive-connected to a first transmission element (web 12) of the second differential (D2) and to a first transmission element (sun gear 7) of the third differential (D3),
- a third transmission element (sun gear 1) of the first differential (D1) is drive-connected to a first electric machine (E1) and can be brought into drive connection with a second transmission element (internal gear 6) of the second differential (D2) by means of a first shifting component (C4),
- a third transmission element (sun gear 4) of the second differential (D2) is drive-connected to a second electric machine (E2) and can be brought into drive connection with a second transmission element (web 13) of the third differential (D3) by means of a second shifting component (C2),
- a third transmission element (internal gear 10) of the third differential (D3) is drive-connected to the gearbox output shaft (GA),
- the second transmission element (internal gear 6) of the second differential (D2) can be connected to a housing by means of a third shifting component (C3),
- the second transmission element (web 13) of the third differential (D3) can be connected to a housing by means of a fourth shifting component (C4),
**characterised in that**
two transmission elements of the first differential (D1) can be connected by a fifth shifting component (C5).

2. Hybrid gearbox according to claim 1,
**characterised in that**
the first transmission element (internal gear 3) and the second transmission element (web 11) of the first differential (D1) can be connected by the fifth shifting component (C5).

3. Hybrid gearbox according to any of the preceding claims,
**characterised in that**
the gearbox input shaft (GE) can be coupled to a housing by means of a first overrunning clutch (F1) in such a way that the internal combustion engine cannot be driven against its running direction by the gearbox input shaft (GE).

4. Hybrid gearbox according to any of the preceding claims,
**characterised in that**
the second transmission element (internal gear 6) of the second differential (D2) can be coupled to a housing by means of a second overrunning clutch (F2).

5. Hybrid gearbox according to any of the preceding claims,
**characterised in that**
six forward gears (gear 1 to gear 6) and five continuously variable gear ranges (EVT1 to EVT5) are implemented.

6. Hybrid gearbox according to any of the preceding claims,
**characterised in that**
two brakes (C1, C3) and three clutches (C2, C4, C5) are provided as shifting components.

## Revendications

1. Transmission hybride pour un véhicule automobile comprenant
- un arbre d'entrée de transmission (GE) qui est ou peut être relié par liaison d'entraînement à un moteur à combustion interne, et à un arbre de sortie d'entraînement (GA),
- trois différentiels (D1, D2, D3) qui sont intercalés dans le flux de force entre l'arbre d'entrée de transmission (GE) et l'arbre de sortie de transmission (GA),
- un premier élément de transmission (couronne 3) du premier différentiel (D1) étant relié par liaison d'entraînement à l'arbre d'entrée d'entraînement (GE),
- un deuxième élément de transmission (porte-satellites 11) du premier différentiel (D1) est relié par liaison d'entraînement à un premier élément de transmission (porte-satellites 12) du deuxième différentiel (D2) et à un premier élément de transmission (roue solaire 7) du troisième différentiel (D3),
- un troisième élément de transmission (roue solaire 1) du premier différentiel (D1) est relié par liaison d'entraînement à une première machine électrique (E1) et peut être relié par liaison d'entraînement à un deuxième élément de transmission (couronne 6) du deuxième différentiel (D2) au moyen d'un premier élément de commutation (C4),
- un troisième élément de transmission (roue solaire 4) du deuxième différentiel (D2) est relié par liaison d'entraînement à une deuxième machine électrique (E2) et peut être relié par liaison d'entraînement à un deuxième élément de transmission (porte-satellites 13) du troisième différentiel (D3) au moyen d'un deuxième élément de commutation (C2),
- un troisième élément de transmission (couronne 10) du troisième différentiel (D3) est relié par liaison d'entraînement à l'arbre de sortie de transmission (GA),
- le deuxième élément de transmission (couronne 6) du deuxième différentiel (D2) peut être relié au moyen d'un troisième élément de commutation (C3) à un boîtier,
- le deuxième élément de transmission (porte-satellites 13) du troisième différentiel (D3) peut être relié au moyen d'un quatrième élément de commutation (C1) à un boîtier,
**caractérisée en ce que** deux éléments de transmission du premier différentiel (D1) peuvent être reliés par un cinquième élément de commutation (C5).

2. Transmission hybride selon la revendication 1, **caractérisée en ce que** le premier élément de transmission (couronne 3) et le deuxième élément de transmission (porte-satellites 11) du premier différentiel (D1) peuvent être reliés par le cinquième élément de commutation (C5).

3. Transmission hydride selon l'une quelconque des revendications précédentes, **caractérisée en ce que** l'arbre d'entrée de transmission (GE) peut être couplé au moyen d'une première roue libre (F1) à un boîtier de sorte que le moteur à combustion interne ne puisse pas être entraîné dans la direction opposée à son sens de rotation par l'arbre d'entrée de transmission (GE).

4. Transmission hybride selon l'une quelconque des revendications précédentes, **caractérisée en ce que** le deuxième élément de transmission (couronne 6) du deuxième différentiel (D2) peut être couplé à un boîtier au moyen d'une seconde roue libre (F2).

5. Transmission hybride selon l'une quelconque des revendications précédentes, **caractérisée en ce que** six marches avant (vitesse 1 à vitesse 6) et cinq modes de conduite en continu (de EVT 1 à EVT 5) sont réalisées.

6. Transmission hybride selon l'une quelconque des revendications précédentes, **caractérisée en ce que** deux freins (C1, C3) et trois embrayages (C2, C4, C5) sont prévus en tant qu'éléments de commutation.
